# EUROPEAN PATENT APPLICATION

(11) **EP 3 270 544 A1**
(43) Date of publication of application: **17.01.2018**
(21) Application number: 16305872.0
(22) Date of filing: 11.07.2016
(51) Int. Cl.: H04L 12/26, G06F 9/455, G06F 9/50, H04L 29/06

(54) **HYPERVISOR MONITORING**

(71) Applicant: ALCATEL LUCENT, 92100 Boulogne-Billancourt (FR)
(72) Inventor: T G, Priya, 560043 Karnataka (IN)
(74) Representative: Mouney, Jérôme

(57) **Abstract**

For monitoring a hypervisor (HYP) in a virtual network function infrastructure, an apparatus performing virtual network function (VNF) hosted in a virtual environment created by the hypervisor (HYP):
authenticates a virtual network function manager (VNFM) and establishes a secure connection with the virtual network function manager (VNFM),
requests statistics associated with the hypervisor (HYP) from the virtual network function manager (VNFM),
computes a value based on the statistics,
if the value (Tq) is lesser than a given threshold (Th), identifies the hypervisor (HYP) as malicious and modify the operating mode of the virtual network function (VNF).

## Description

### FIELD OF THE INVENTION

The present invention pertains to the field of network function virtualization.

### BACKGROUND

The deployment of Virtual Network Function (VNF) in a shared third party infrastructure with components delivered by different vendors (i.e. Hardware, Host Operating System, Hypervisor, Guest Operating System etc.) introduces new kinds of security threats that need to be addressed. In addition, the concept of virtualization causes dispersion of VNFs across different physical resources. Dispersion of VNFs and migration of VNFs for optimization or maintenance purposes blur the physical boundaries of network functions and introduces new challenges in securing the VNF.

VNF vendors currently employ certain methods to secure network functions hosted in third party infrastructure, such as a hypervisor integrity and authentication, establishing chain of trust. The method relies on a secure boot, from NFV perspective, that is a mechanism that verifies integrity of components involved in the boot process, including verification of hypervisor integrity. A secure boot of the VNF involves the following boot sequence : hardware, host operating system, hypervisor & platform, VNF virtualization container (by hypervisor), VNF operating system, VNF application. The integrity of hypervisor is verified by the host operating system during the secure boot process. This ensures that the hypervisor's code is not modified in any fashion and hypervisor's data is not maliciously changed and the hypervisor is from a certified vendor. Integrity-protected hypervisor is a necessary, but not sufficient for maintaining data secrecy. An integrity protected hypervisor could still have malicious intentions or have potential bugs that could snoop in to VNF data or expose traffic between its mutually distrusting guests (i.e. VNFs).

The provisioning of virtual firewalls for VNFs enables service providers to create, manage and adjust security zones in conjunction with configuration and placement of VNFs. This ensures confidentiality and secrecy of VNF data. However, hypervisor has higher privileges compared to VNFs; hence possibilities of exposure of sensitive data when hosted on malicious hypervisors cannot be ruled out

Hypervisor Introspection is a technique where the hypervisor inspects the VNFs for suspicious or malicious behavior. Currently, there is no existing approach where the hypervisor is monitored for any suspicious behavior by other entity.

Hypervisors create new attack surfaces that could result in loss of privacy due to compromised isolation between VNFs or between hypervisor and VNF. Thus, it becomes mandatory to secure the VNF against possible exploits from hypervisors.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for monitoring a hypervisor in a virtual network function infrastructure, the method comprising the following steps in an apparatus performing virtual network function hosted in a virtual environment created by the hypervisor:
authenticating a virtual network function manager and establishing a secure connection with the virtual network function manager,
requesting statistics associated with the hypervisor from the virtual network function manager,
computing a value based on the requested statistics,
if the value is lesser than a given threshold, identifying the hypervisor as malicious and modifying the operating mode of the virtual network function

Advantageously, the virtual network function is able to proactively identify vulnerabilities of a hypervisor and to take preventive actions, thus preventing any exploits or attacks to the virtual network function and other ones.

In an embodiment, the virtual network function is in boot up phase and boots with limited privilege or does not boot after having identified the hypervisor as malicious.

In an embodiment, the virtual network function is in run time phase and suspends its activities or shuts down after having identified the hypervisor as malicious.

In an embodiment, the virtual network function is in run time phase, requests statistics associated with the hypervisor from the virtual network function manager at regular time intervals, and computes the value based on the statistics requested at regular time intervals.

In an embodiment, the virtual network function sends a report to the virtual network function manager about the identified maliciousness of the hypervisor.

The invention relates also to an apparatus performing virtual network function for monitoring a hypervisor in a virtual network function infrastructure, comprising:
memory to store computer executable instructions; and
a processor to access the memory and execute the computer executable instructions to:
   authenticate a virtual network function manager and establish a secure connection with the virtual network function manager,
   request statistics associated with the hypervisor from the virtual network function manager,
   compute a value based on the statistics,
   if the value is lesser than a given threshold, identify the hypervisor as malicious and modify the operating mode of the virtual network function.

The invention also pertains to a computer program capable of being implemented within an apparatus, said program comprising instructions which, when the program is executed within said apparatus, carry out steps according to the inventive method.

The present invention and the benefits thereof shall be better understood upon examining the description below, which makes reference to the attached figures, in which:
- FIG. 1 is a schematic block diagram of a communication system according to one embodiment of the invention for monitoring a hypervisor in a virtual network function infrastructure; and
- FIG. 2 is an algorithm of a method for monitoring a hypervisor in a virtual network function infrastructure according to one embodiment of the invention.

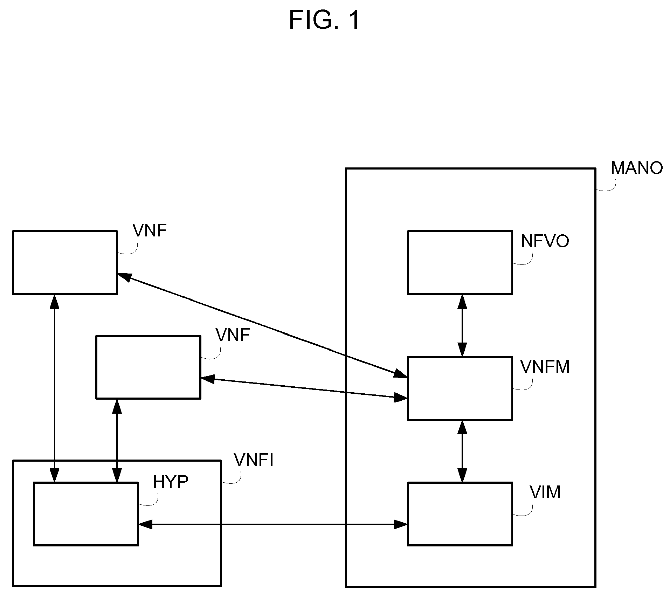

Referring to FIG. 1, a communication system comprises a management and orchestration system MANO, a virtual network function infrastructure VNFI hosting a hypervisor HYP, and a virtual network function VNF.

Network functions virtualization is an emerging design approach to transform network functions (NFs) previously performed via proprietary hardware appliances into virtual network function VNFs by implementing the NFs as application software which can be run on a range of standardized, high-volume servers, switches, and storage that can be located in datacenters or network nodes for example.

Virtualizing NFs ends the dependency between a NF and its hardware (as is the case with physical hardware appliances) by creating a standardized execution for virtual network functions. This enables the sharing of physical hardware by multiple virtual network function, wherein the pooling of hardware, in-turn, enables the sharing of the resources of the virtual network function infrastructure VNFI.

The virtual network function VNF is hosted in a virtual environment created by the hypervisor HYP. The virtual network function VNF refers to the implementation of a network function using software that is decoupled from the underlying hardware.

A virtual network function VNF may include one or more components of one or more types, with each component being realizable by various technologies, including by virtual machines executing application software. A virtual machine is a software implementation of a machine (i.e. a computer) that executes programs like a physical machine. Virtual machines enable a host computer to run multiple application environments or operating systems simultaneously on the same computer. The host computer allots a certain amount of the host's resources to each virtual machine, and each virtual machine is then able to use the allotted resources to execute application software, including operating systems. A virtual machine virtualizes the underlying hardware of the host computer or emulated hardware devices, making the use of the virtual machine transparent to the operating system or to the user of the application software.

Virtual machines on a host computer are typically managed by application software referred to as a hypervisor, like hypervisor HYP. Among operations that the hypervisor may perform are operations to create, start, stop, hibernate, activate, deactivate, and delete a virtual machine. To create a virtual machine, the hypervisor may use an image file stored on some persistent storage media. The image file contains an operating system application and other application software that will be started when the hypervisor creates a virtual machine from the image file.

The virtual network function VNF is implemented in an apparatus that contains a memory that may be coupled to a processor and may be a non-transitory medium configured to store various types of data. The memory may comprise memory devices including secondary storage, read only memory (ROM), and random access memory (RAM). The secondary storage is typically comprised of one or more disk drives, solid-state drives (SSDs), and/or tape drives and is used for non-volatile storage of data and as an over-flow data storage device if the RAM is not large enough to hold all working data. The secondary storage may be used to store programs that are loaded into the RAM when such programs are selected for execution. The ROM is used to store instructions and perhaps data that are read during program execution. The ROM is a non-volatile memory device that typically has a small memory capacity relative to the larger memory capacity of the secondary storage. The RAM is used to store volatile data and perhaps to store instructions. Access to both the ROM and the RAM is typically faster than to the secondary storage. In one embodiment, the memory comprises a virtual network function that may be implemented on the processor.

The system MANO comprises a virtual infrastructure manager VIM, a virtual network function manager VNFM and a virtual network function orchestrator NFVO.

The virtual infrastructure manager VIM collects and stores the behavioral aspects of hypervisors on a periodic basis through Nf-Vi interface. The virtual infrastructure manager VIM may be configured to perform management functionalities that are used to control and manage the interaction of a virtual network function with different kind of computing hardware. For example, the virtual infrastructure manager VIM may perform resource management functions, such as managing infrastructure resource and allocation (e.g. increase resources to virtual containers).

The virtual network function manager VNFM collects statistics of virtual network functions that it manages through a VeNf-Vnfm interface. In addition, it collects statistics for those virtual network functions hosted in the same hypervisor (that it does not manage) from the network function virtualization orchestrator NFVO through a Or-Vnfm interface.

The virtual network function manager VNFM collects behavior related data of hypervisor from the virtual infrastructure manager VIM through a Vi-Vnfm interface and provides this information upon request from a virtual network function. The virtual network function manager VNFM may perform a variety of managing functions, such as instantiating, updating, querying, scaling, and/or terminating virtual network functions.

The network function virtualization orchestrator NFVO may communicate with one or more virtual network functions managers VNFM to implement resource related requests, send configuration information to the virtual network functions managers VNFM, and collect state information of the virtual network functions VNF. In addition, the network function virtualization orchestrator NFVO may communicate with the virtual infrastructure manager VIM to implement resource allocation and/or to reserve and exchange virtualized hardware resource configuration and state information.

The virtual network function infrastructure VNFI comprises hardware components, software components, or a combination of both to build up the virtualized environment to deploy, manage, and execute the virtual network functions. In other words, the hardware resources and virtualization layer are used to provide virtualized resources, such as virtual machines and other forms of virtual containers, for virtual network functions. The hardware resources comprise the computing hardware, storage hardware, and network hardware. The computing hardware may be used to provide processing and computing resources. The storage hardware may provide storage capacity that may be provided within the network or resides within the storage hardware itself. The network hardware may be switches (e.g. commodity switches), routers, and/or any other network device configured to perform switching functions that are interconnected via wire and/or wireless links.

The virtualization layer within the The virtual network function infrastructure VNFI may abstract the hardware resources and decouple the virtual network function VNF from the underlying physical network layer to provide virtualized resources to the virtual network function VNF. The virtualized resources are managed by the hypervisor HYP.

In one embodiment, during boot up, the virtual network function VNF verifies behavioral aspects of the hypervisor HYP over a certain time period in the recent past during initialization with the help of entities in the system MANO. The virtual network function VNF computes a trust quotient for the hypervisor HYP based on this information. If the trust quotient is lower than a threshold, the virtual network function VNF marks the hypervisor HYP as "suspicious", notifies the virtual network function manager VNFM and boots with reduced privileges or does not boot up.

In one embodiment, during run time, the virtual network function VNF periodically polls the behavioral aspects of the hypervisor HYP through entities in the system MANO and computes a trust quotient for the hypervisor HYP based on this information. If the trust quotient over successive intervals remains lower than the threshold, virtual network function VNF notifies the virtual network function manager VNFM and suspends itself.

Some examples of behavioral aspects that can be collected over a period of time include:
- Number of hypervisor crashes;
- Statistics regarding crashes of virtual network functions hosted in a particular hypervisor;
- virtual network function instances in the hypervisor hogging more than its share of compute, storage or network resources;
- The number of virtual network functions instantiated , terminated or suspended in the hypervisor during a specified time interval;
- Local storage statistics of hypervisor;
- Consumption of file descriptors, event channels etc...;
- Consumption of kernel memory;
- Key Performance statistics (memory, CPU usage, file system statistics) of the hypervisor based on which any suspicious activity can be detected.

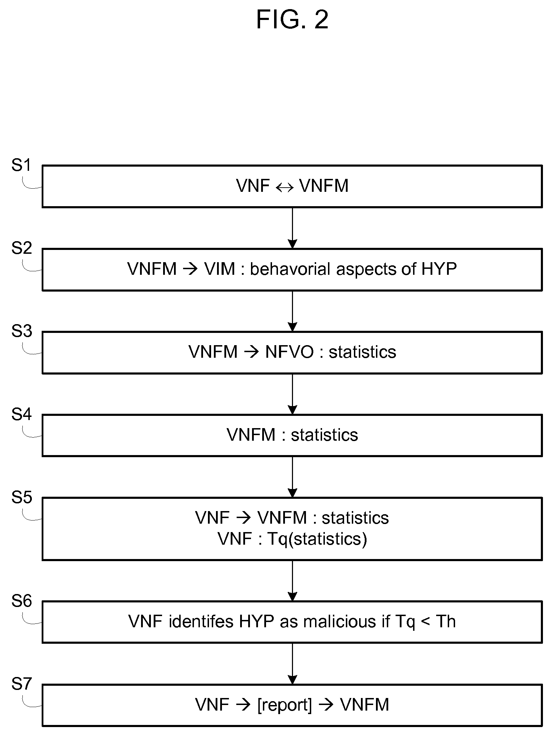

With reference to FIG. 2, a method for monitoring a hypervisor in a virtual network function infrastructure according to one embodiment of the invention comprises steps S1 to S7.

In step S1, during boot up of the virtual network function VNF, the virtual network function VNF and the virtual network function manager VNFM authenticate each other and establish secure connection. For example, the secure connection is based on TLS (Transport Layer Security) or SSH (Secure Shell).

In step S2, the virtual network function manager VNFM requests for behavioral aspects of hypervisor HYP from the virtual infrastructure manager VIM that collects and stores the behavioral aspects of different hypervisors on a periodic basis through Nf-Vi interface.

In step S3, the virtual network function manager VNFM requests statistics of VNFMs hosted in the same hypervisor from the virtual network function orchestrator NFVO that is able to communicate with one or more virtual network functions managers VNFM. For example, the statistics are related to the number of virtual network functions instantiated, terminated or suspended in the hypervisor HYP during a specified time interval. As a virtual network function manager could manage one or more virtual network functions, information regarding certain statistics are collected by other virtual network function managers.

In step S4, the virtual network function manager VNFM computes statistics of other virtual network functions hosted in hypervisor HYP.

In step S5, the virtual network function VNF requests for statistics from the virtual network function manager VNFM and computes a trust quotient Tq based on statistics received from the virtual network function manager VNFM.

Step S5 can be reiterated as the virtual network function VNF may request for statistics at regular time intervals. In this case, the virtual network function manager VNFM computes a trust quotient Tq based on statistics received from the virtual network function manager VNFM.

In step S6, if the computed trust quotient Tq is lesser than a given threshold Th, the virtual network function VNF identifies the hypervisor HYP as malicious and modifies its operating mode to take preventive actions.

If the virtual network function VNF is in boot up phase, it can boot with limited privilege or not boot.

If the virtual network function VNF is in run time phase, it can suspend its activities or even shut down.

In step S7, the virtual network function VNF sends a report to the virtual network function manager VNFM about the identified maliciousness of the hypervisor HYP.

In an illustrative example, virtual network functions VNF B and VNF C are hosted in hypervisor A and managed by virtual network function manager VNFM BC. The virtual network function VNF B has configured a given threshold for trust quotient as 15.

After a time interval from time T0 to time T1, virtual network function VNF B starts computation of behavioral aspects of the hypervisor A. Such behavioral aspects comprise:
- the hypervisor crashed once,
- the hypervisor's consumption of network, storage and resources and kernel was within the limits,
- too many virtual network functions VNF were instantiated and terminated.

Thus, the virtual network function VNF B computes a value as trust quotient for hypervisor A which is equal to 5 which is below the given threshold equal to 15.

After a time interval from time T1 to time T2, virtual network function VNF B starts again computation of behavioral aspects of the hypervisor A. Such behavioral aspects comprise:
- the hypervisor has crashed 7 times,
- the hypervisor hogged CPU beyond its share and the kernel memory consumption exceeded the limits during this interval.

Based on the above behavioral aspects, the virtual network function VNF B computes the trust quotient as 10 which is above the given threshold equal to 15. The calculation of the trust quotient may be defined in different ways by an administrator. In one example, the more negative behavioral aspects the hypervisor A has, the worse value as trust quotient it gets.

The virtual network function VNF B repeats this computation at time T3 and T4 (for two subsequent time intervals). If the trust quotient remains below the given threshold after time T4, the virtual network function VNF B notifies the virtual network function manager VNFM BC and suspends itself.

The invention described here relates to a method and an apparatus for monitoring a hypervisor in a virtual network function infrastructure. According to one implementation of the invention, the steps of the invention are determined by the instructions of a computer program incorporated into the apparatus. The program comprises program instructions which, when said program is loaded and executed within the apparatus, carry out the steps of the inventive method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the inventive method.

## Claims

1. A method for monitoring a hypervisor (HYP) in a virtual network function infrastructure, the method comprising the following steps in an apparatus performing virtual network function (VNF) hosted in a virtual environment created by the hypervisor (HYP):
authenticating (S2) a virtual network function manager (VNFM) and establishing a secure connection with the virtual network function manager (VNFM),
requesting (S4) statistics associated with the hypervisor (HYP) from the virtual network function manager (VNFM),
computing (S5) a value (Tq) based on the requested statistics,
if the value (Tq) is lesser than a given threshold (Th), identifying (S6) the hypervisor (HYP) as malicious and modifying the operating mode of the virtual network function (VNF).

2. A method according to claim 1, wherein the virtual network function (VNF) is in boot up phase and boots with limited privilege or does not boot after having identified the hypervisor (HYP) as malicious.

3. A method according to claim 1, wherein the virtual network function (VNF) is in run time phase and suspends its activities or shuts down after having identified the hypervisor (HYP) as malicious.

4. A method according to any of the claims 1 to 3, wherein the virtual network function (VNF) is in run time phase, requests statistics associated with the hypervisor (HYP) from the virtual network function manager at regular time intervals, and computes the value (Tq) based on the statistics requested at regular time intervals.

5. A method according to any of the claims 1 to 4, wherein the virtual network function (VNF) sends a report to the virtual network function manager (VNFM) about the identified maliciousness of the hypervisor (HYP).

6. An apparatus performing virtual network function (VNF) for monitoring a hypervisor in a virtual network function infrastructure, comprising:
memory to store computer executable instructions; and
a processor to access the memory and execute the computer executable instructions to:
authenticate a virtual network function manager (VNFM) and establish a secure connection with the virtual network function manager (VNFM),
request statistics associated with the hypervisor (HYP) from the virtual network function manager (VNFM),
compute a value based on the statistics,
if the value (Tq) is lesser than a given threshold (Th), identify the hypervisor (HYP) as malicious and modify the operating mode of the virtual network function (VNF).

7. A non-transitory computer readable storage medium storing instructions that, when executed by an apparatus, cause the apparatus to perform a method for monitoring a hypervisor (HYP) in a virtual network function infrastructure, the apparatus performing virtual network function (VNF) hosted in a virtual environment created by the hypervisor, the method comprising:
authenticating (S2) a virtual network function manager (VNFM) and establishing a secure connection with the virtual network function manager (VNFM),
requesting (S4) statistics associated with the hypervisor (HYP) from the virtual network function manager (VNFM),
computing (S5) a value (Tq) based on the requested statistics,
if the value (Tq) is lesser than a given threshold (Th), identifying (S6) the hypervisor (HYP) as malicious and modifying the operating mode of the virtual network function (VNF).
